# EUROPEAN PATENT APPLICATION

(11) **EP 1 329 864 A1**
(43) Date of publication of application: **23.07.2003**
(21) Application number: 02445004.1
(22) Date of filing: 16.01.2002
(51) Int. Cl.: G09B 7/00

(54) **System for interactive learning**

(71) Applicant: Aproch...AB, 262 31 Ängelholm (SE)
(72) Inventor: Lundgren, Stefan, 262 32 Ängelholm (SE); Helmersson, Bengt, 266 98 Hjärnarp (SE)
(74) Representative: Akerman, Marten Lennart

(57) **Abstract**

System for interactive learning within a subject with measurable user progress, which system comprises a training administration device, including a data set of user training data items representing a training instruction and a target to be reached, control means for accessing said user training data items, and first communication means. The system also comprises a user device, including second communication means for transmitting user data to said first communication means. Said control means is devised to select, from said data set, a subset of user training data items suitable for said user, dependent on said user data. Preferably said control means is devised to transmit the user training data items of said subset one by one, and to require reception of a target fulfilment signal from the user device prior to transmitting a subsequent user training data item.

## Description

### TECHNICAL FIELD

The present invention relates to a interactive learning system suitable for training a user of the system such that an increased skill is obtained in a selected subject, within which subject user progress is measurable. More specifically, the invention relates to solutions for automatically and individually adapting the training within a subject to the system users, and for automatically using the user interaction to improve the system.

### STATE OF THE ART

The traditional form of education within most subjects is based on a teacher-pupil system, in which the teacher verbally educates his or her students. On top of that, in many education systems the students are obliged to perform some form of training by themselves. Such training may be in the form of studying books, performing practical exercises, doing computer assignments, and so on. Furthermore, in order to measure the skills of the students, and as a tool for establishing that a certain stage in the education has been successfully passed, tests or exams are commonly provided.

Education within traditional school subjects, such as e.g. mathematics, history and languages, is generally conducted by a teacher before a class of students. Self-studies are performed by the students in seminars and as homework, and regularly a test is given to the students marking the end of a stage in the curriculum. Other examples of subjects in which the progress of the students is measurable include, besides common school subjects, different forms of sports, gardening, stock trading, genealogy, cooking and so on. Other subject, which are traditionally less focused on teacher-student education, but still fall within the scope of being a field in which progress can be made by training, includes e.g. relationship or marriage management, parenthood, weight control and the like. For some of these subjects it may be difficult to measure progress objectively, but targets may nevertheless be implicitly or explicitly derivable in most cases.

A problem with most forms of education is that for several reasons the material used, as well as the pace of the education and the expected targets to be reached, is highly standardised in order for the education to fit a large group of people. For economical reasons it is simply not possible to provide tailor made education for each and every individual, and consequently teaching is most often provided in classes or other corresponding configurations with a number of people being trained by one, or at least a smaller number of teachers. If a person does not feel this is the way to gain progress within a selected subject, that person is generally confined to self-studies by reading books or manuals. However, for the same reasons as above, such written educational means are often also quite general, and not necessarily suited to the special needs of that person.

Another problem related to learning and training is the student's accessibility to the teacher. In order to take on certain educational steps, such as assignments, exercise programs etc, and to prove the success of such assignments, a communication between the student and the teacher is desirable. Limiting the chances for interaction with the teacher to classes, lectures and exams is not always the best way for the single student, but is rather a way of making the education equal for everyone without being optimum for anyone.

Furthermore, the curriculum of the education within a subject is usually determined beforehand, for different reasons. Changing the pace or order of the training may prove difficult when the interests of a plurality of students must be considered, or when standardised goal on e.g. a national level are to be fulfilled within a predetermined time period. It is generally also quite difficult for a teacher or trainer to track and respond to the results or performance of the students and to use this to improve the educational system used.

### SUMMARY OF THE INVENTION

The object of the invention is to solve the problems of providing a system for interactive learning, which can be automatically adapted to the users of the system. An aspect of that object is to provide a system for interactive learning overcoming the problems related to the prior art.

According to an overall aspect, the invention relates to a system for interactive learning within a subject with measurable user progress, comprising:
- a training administration device, including a data set of user training data items, each training data item including a representation of a training instruction and a target to be reached, control means for accessing said user training data items, and first communication means;
- a user device, including second communication means for transmitting user data to said first communication means,
wherein said control means is devised to select, from said data set, a subset of user training data items suitable for said user, dependent on said user data.

An advantage with the invention is that the training administration device, e.g. a computer server, may be devised to contain a vast amount of different training step instructions together with the associated target to be reached after following the instruction of that step. Still, by using the user data sent by a user from e.g. a mobile phone terminal to the training administration device, the training of that specific user is automatically tailor made dependent on that user data.

Various aspects of the invention include a method for performing the steps recited in the description below, as well as a computer program product for controlling a computer server to perform the duties of the training administration device as described in this application. Other characteristics and embodiments of the invention are evident from the detailed description and the appended claims.

### BRIEF DESCRIPTION OF THE DRAWINGS

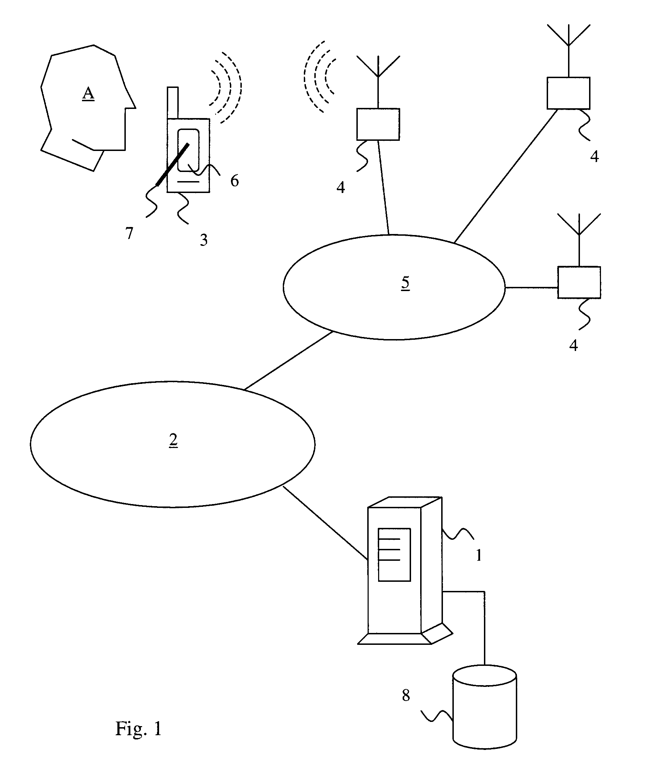

The invention will now be explained in further detail, with reference to the enclosed drawing, on which
Fig. 1 shows one embodiment of the system for interactive learning according to the present invention;

### DETAILED DESCRIPTION OF PREFERRED EMBODIMENTS

The present invention is, as stated before, applicable to a multitude of different subjects or fields of knowledge. In order to describe the invention as clearly as possible, embodiments within a couple of different subjects are given below, using different embodiments of the features of the claimed invention. As a skilled person will realise, though, the invention may be applied to many other subjects within which user progress is measurable, and that several embodiments other than those explicitly described are possible. The described embodiments should therefore be regarded solely as examples.

According to one aspect, the invention relates to a system and a method for interactive learning. In a general embodiment, the method includes the following steps:
- A system user defines user data, in a more specific embodiment comprising his or her personal characteristics regarding e.g. age, sex, and/or the current level of skill within the field or subject learning is desired.
- The user data is input into a training administration device, preferably a computer system, which includes a data set of stored user training data items. Each of those training data items includes a representation of a training instruction and a target to be reached.
- Dependent on the user data, control means in the training administration device, such as a computer application program, is devised to select, from said data set, a subset of user training data items suitable for said user.

The training administration device preferably transmits the selected subset to a user device where the associated instructions and targets are presented to the user. The user device can take various forms, e.g. a mobile phone, a PDA (Personal Digital Assistant), or a computer connected to a data communication network such as the Internet. In one embodiment, said transmission may be an internal transmission within a computer executing the steps of the training administration device, wherein the presentation is executed on a display connected to that computer.

Prior to the step of defining the user data, the method preferably comprises the step of said user signing up for the learning or training service of the invention, hence becoming a subscriber of the system. In one embodiment the user may subscribe to an all-purpose application of the system, from which any subject to which the system is adapted is selectable. Alternatively, the subscription may specifically cover only one or a limited number of subjects.

When initiating the service a specific subject is selected by the user, unless the subject is uniquely defined by the subscription. The user data is defined by the user. Regarding some information, such as the age or sex of the user, this is suitably done by using some form of user data input means connected to the user device. Such user data input means may be e.g. a keyboard, a touch-sensitive screen, or a microphone connected to a receiver with a speech recognition function. In order for the training administration device to be capable of selecting the proper set of training data items for the user, and particularly the starting level, it is desirable to provide an identification of the user's starting skills within the subject. When starting the service, the user is therefore preferably instructed by the training administration device to input starting skill data. In one embodiment the training administration device also provides an instruction for the user on how to define such starting skill data, or even a selection of skill levels to choose from. If the user is unaware or uncertain of the present skills, a test instruction may be requested from and given by the training administration device. Once having performed such a test, the result thereof is reported to the training administration device as the starting skill data for the user.

For some subjects it may be possible to inherently deduce the desired target skill for the user. For example, if the subject is devised to learning how the perform something, to be able to perform that something will also be the target. However, in almost every subject there is no real final stage, anyone could always become even better. Therefore, an indication of the desired goal skill should preferably be provided to the training administration device.

At this stage, the training administration device has enough information to select a user adapted training service. In one embodiment, every user training data item corresponds to a level to which a mutually unique difficulty degree parameter value is associated. Within some subjects, each piece of user information of the user data will be used by the training administration device to select proper training data items to be included in the training of the user. In one example where the subject is a form of sport, exercises which put high strain on the human body may be inappropriate for younger users who are still growing. Furthermore, the capabilities of men and women to reach certain levels may differ a lot. Also, the requirements may differ dependent on the sex. One such example is the subject of hurdles within track and field. The hurdles for women are substantially lower than for men, for obvious reasons. However, they are in fact so much smaller that the technique for running hurdles is quite different, and therefore also the training may be differently focused. Consequently, once the subject is selected, and the sex and age is defined, the training administration device can identify which training data items, with related instructions and targets, might be used for the specific training of the specific user. By providing the starting skill data and goal skill data, a subset of training data items is selected by the training administration device, which subset is tailor made for the specific user.

In a preferred embodiment the training administration device transmits the user training data items of said subset one by one to the user, in the order of said difficulty degree parameters values. At the transmission of the first training data item, the first training instruction is presented to the user, and preferably also the target to be reached by that instruction. The training data item may be a computer program object comprising computer code which can be read and displayed by a computer. This first transmission, and possibly also the subsequent transmissions of training data items, may also include the total number of steps to pass before reaching the goal skill target, corresponding to the number of training data items in the subset. Dependent on the subject, any requirements for performing the training of all or certain steps may be given by the training administration device, such as e.g. equipment, access to training facilities, etc.

When the user has received the training instructions of the first training data item, the user can start training according to those instructions. In one embodiment, the training may be put in the form of a challenge, and hence the related target is that the challenge is fulfilled. Such a challenge can simply be to repeat a certain practice drill a given number of times.

Once the target is reached, the user reports back to the training administration device through said user device, by transmitting a target fulfilment report. In one embodiment, the target fulfilment report may simply be a statement from the user indicating that the target of the training data item has been reached. The target may also be to provide a correct answer on one or more questions, or to actually prove success of an assignment included in the instructions, to the training administration device. For the latter, wherein the subject is computer programming, one example may e.g. be, to report a computer program which the user has written in response to the instructions of the training data item. This report preferably also includes timing information, referring to when the target was fulfilled. The timing information may be given by the user, but in a simple embodiment the timing information can be automatically calculated by the training administration device from the time of receiving the target fulfilment report from the user, although this does not necessarily correspond perfectly with the time of fulfilment. If the user has failed to fulfil the target, or finds it difficult to reach the target due to the effort needed, this failure is instead reported to the training administration device. A report of failure will, in one embodiment, trigger the training administration device to transmit auxiliary practice data to the user, specifically adapted to provide a better or more thorough training in order to reach the target of the level in question. Alternatively, access data for retrieving such auxiliary practice data is included in the training data item of that level, such that the user may access that auxiliary practice data without renewed communication with the training administration device. The auxiliary practice data may include drills or exercises of the same category, meaning that they are helpful for reaching the target, but which are easier and more extensive in e.g. amount. In one embodiment, an automatic or user selected contact with a consultant within the field can be arranged when difficulties to reach a target occurs. Also this consultant contact may be triggered by the training administration device upon detecting failure or difficulty reports from the users, or alternatively the access to such a contact, e.g. a telephone number or an e-mail address, may be included in the training data item.

When the training administration device detects that a target fulfilment report has been received from the user, and, in case the target fulfilment report includes an answer or the like to be automatically reviewed by the training administration device, that target fulfilment report is approved, the control means of the training administration device extracts a new stored training data item, which new training data item represents the training step subsequent to the reported fulfilled step. In other words, the control means selects from the subset of training data items the one having the next higher difficulty degree parameter value in order. As long as the training targets are fulfilled, this procedure is repeated until the student or user has reached the goal skill. When sending a new training data item to the user, the training administration device is also, in one embodiment, devised to send along a status report. Such a status report may e.g. include an indication of the level just passed, the time it took to pass it, the number of levels passed and remaining as well as the total time lapsed since starting the program from the starting skill and the estimated time to reach the goal skill. This report may also include information on how other users have done in the subject, as is described in more detail below. If the target fulfilment report included an answer or report of an assignment, or the like, which has to be reviewed by the training administration device, the status report may also include an indication of the points scored, the correctness of the target fulfilment report, or some other indication of how well the user did on the last level.

The system is devised to be used by a plurality of users, actually the more the better. The reason for this is that in one embodiment the system is devised to improve itself dependent on the reports given to it by it's users. If it has been detected that the time for fulfilling a certain step, i.e. reaching the target of one training data item, is longer than the corresponding time for other training data items, the control means will, in one embodiment, change the order of the steps in the subset of training data items. In other words, the order of the difficulty degree parameter values is changed. Since these are mutually unique, changing e.g. the difficulty degree parameter value of a training data item from 5 to 6, also means changing the difficulty degree parameter value of the training data item previously having difficulty degree parameter value 6 to 5. As a person skilled in the art will realise, the control means may also be devised to change the order in a more complex manner, e.g. two steps. For determining if the control means shall change the order, a criterion for such a determination must be established. One way of doing this is to set a maximum standard time when establishing the training data item, within which the target is assumed to be fulfilled. When a predetermined percentage of users, having completely or partly corresponding user data, have been detected not to meet this standard maximum time, the difficulty parameter values are automatically changed.

The control means is, in one embodiment, also devised to react on detection of failure or difficulty to reach a certain target by ordering a change in the training instruction of that item. This ordering of training instruction changes may be given as an alternative to changing the difficulty parameter value, or be used as a complement if the re-ordering does not bring about an increased success rate. Changing the training instructions is not performed by the system as such, but the training administration device will produce an instruction change signal. The instructions are preferably created, and changed if needed, by experts within the specific subjects.

In a preferred embodiment, the order is changed for all users, i.e. subscribers, which have not yet passed the difficult target in question. This way, all users may benefit from their own track record, as well as the records of the other users.

During any stage of the training, i.e. at the level of any training data item, a summary of the passed levels may be given to the user by the training administration device, e.g. along with the transmission of a new data item. Along with this summary, an indication of the remaining steps may also be given. At the end of the training, when the skill goal is reached, a summary of the completed interactive learning service is preferably given, accompanied by a diploma or the like. In one embodiment, suggestions to tougher challenges with higher goal skills may also be given when the complete training program is finished. Other types of statistics may also be provided for free or for sale to the users, regarding e.g. estimated time to reach the goal skill, or various information on how other users, partly or fully corresponding in user data, are or have been managing with the different levels.

One embodiment of the invention is related to the field or subject of golf, and it is described below with reference to Fig. 1. A user A is a subscriber of an interactive learning service according to the invention, accessible by communication with a training server 1 connected to a communication network 2, which server acts as the training administration device. For communicating with the server 1 the user A has a user device in the form of a mobile phone 3, communicatively connectable to the server 1 through base stations 4 of a stationary mobile phone network 5, which in turn is connected to communication network 2. In the disclosed embodiment of Fig. 1, As the skilled person will realise, the communication network may in one embodiment be the Internet, a LAN (Local Area Network) or some other network suited for data communications. The mobile phone network 5 may be a part of a 2^{nd} generation cellular mobile phone system, such as GSM (Global System for Mobile communications), a 3^{rd} generation mobile phone system such as UMTS (Universal Mobile Telephone System), or some other network suited for telephone communications.

User A has the desire to improve his golf game. He therefore establishes contact with the server 1 from his mobile phone over the mobile phone system 5 and communication network 2. In one embodiment this is done by simply dialling a phone number for the requested service. Within the field of golf, the user may select one of a plurality of more specific subjects, e.g. generally improving his level in the game by lowering his handicap, or improving his short game. As an example, the user may select to improve his drives, i.e. the first shot played on a hole from the tee. The selection is made using some form of data input means connected to the mobile phone 3, in the illustrated embodiment a touch-sensitive screen 6 and a pen 7 adapted for the purpose.

The server 1 is connected to a database 8, comprising a plurality of golf practises separately stored in training data items. The specific instructions of each training data item has been provided by an expert within the subject, in this case e.g. a golf pro. User A inputs his age and sex, and in this embodiment also his golf handicap. This information constitutes the user data, which is sent to the server 1. Since the subject to be improved is the users driving skills, and the technique for hitting a good and long drive is dependent on e.g. the agility and physical strength of the player, the user data is used by the computer system of the server 1 to define a subset of training data items suitable for user A. Furthermore, other parameters relating to the user data may be requested, such as the user's length and weight, which might affect the swing path, and so on. Consequently, the user data may be defined in one message to the server 1, or in a communication between the user A, through his mobile phone 3, and the server 1. Every bit of information can be used by the server 1 to include or exclude certain training data items from the selected subset. A goal skill is also needed to close the subset, by constituting an upper difficulty level to be reached. The goal skill too is supplied to the server 1 by the user A. For the subject of this example, the goal skill for user A may be to hit a drive over 250 meters, or perhaps to be able to make a controlled fade or draw.

Since hitting drives is only one part of the game, the quality thereof may vary a lot regardless of the current handicap of the user. Consequently, the server 1 is devised to automatically retrieve a test from a test data memory (not shown) when detecting a service request within this subject. The retrieved test, or more correctly a test data item representing a test instruction, is thereby sent to user A, i.e. to the mobile phone 3. This test is presented on the screen 6 of the mobile phone, wherein the user e.g. is instructed to hit a predetermined number of drives, and to report the success rate in a suitable manner, such as e.g. the percentage of drive flying and landing within a 40 meter corridor, or carrying over 200 meters. User A performs the test and reports back to the server 1. From the reported results a measure of the present skill of the user A is calculated by server 1. From this measure the first training data item is selected from database 8, and transmitted to the mobile phone 3 of user A.

Upon reception of the training data item in the user device 3, the training instruction which it represents is presented on the screen 6, e.g. to use a certain grip or to pace the ball in a specific place in relation to his feet and hitting the ball therefrom. A specific target of that training data item, e.g. to hit a number of consecutive controlled drives a certain distance, may also be included and presented. The target may also simply be that the training instruction has been followed and that the proposed exercises have been performed. When user A has managed to reach that target, the user reports back to the server 1 using his phone 3. In accordance with the invention, the server 1 is devised such that a subsequent training data item of the selected subset may not be transmitted to the user until the target of the previous training data item is reported as reached by user A.

As has been described above, the server 1 may react to the time it has taken for the user to reach the target of a training data item, and to change the order of the training data items by changing the difficulty parameter value of the training data items of the subset. This change of difficulty rating is also saved by the server 1 and used for the order of the training data items for other users trying to improve their golf drives. In short, exercises that have turned out to be easier than expected are moved to an earlier place in the consecutive chain of training data items in the subset, whereas exercises that have turned out to be more difficult than expected are moved to a later place in the subset. As pointed out above, this means that the system is improved by the logging of reported results of the system users, to the potential advantage of all users within this subject. It should be noted, though, that for a certain user desiring progress within a certain field, a specific training instruction and target that, from the results of other users, has been detected to be too easy or difficult for it to have the difficulty degree parameter it has, may not at all be selected to be included in that users particular subset, dependent on the user data of that user.

Auxiliary practice data may, as mentioned above, include drills or exercises which are helpful for reaching the target of a certain stage, but which are easier and more extensive in e.g. amount than the ones given in the training data item. Such auxiliary practice data may be accessible from the server 1 via the mobile phone 3. In one embodiment, an automatic or user selected contact with a consultant within the field, in this case a golf pro, can also be provided. Any or both of these measures may be taken when difficulties to reach a target occurs. Such measures can be triggered by the server 1 upon detecting failure or difficulty reports from the users, or alternatively the access to such auxiliary practice data or golf pro, e.g. a telephone number or an e-mail address, may be included in the training data item.

When the server 1 detects that a target fulfilment report has been received from the user, the control means of the server 1 extracts a new stored training data item, which new training data item represents the training step subsequent to the reported fulfilled step. In other words, the control means selects from the subset of training data items the one having the next higher difficulty degree parameter value in order. As long as the training targets are fulfilled, this procedure is repeated until the student, user A, has reached the goal skill. Other features described in the general case above are of course also applicable to this embodiment.

As the person skilled in the art will realise, several modifications of the presented embodiments can be made without departing from the scope of the appended claims. The communication between the user and the training administration device is in the embodiment of the drawing described as using a mobile phone system. Other alternatives are to use e-mail from a computer, stationary or portable, or to interact directly with a computer program product which, when executed on a computer, makes that computer act as the training administration device as described. That computer program product may be stored on a computer readable medium, such as a CD or a DVD, or may be accessed from a web site through a user computer acting as user device, connected to the Internet. The instructions may of course also be audible and played through a loudspeaker to the user, or comprise pictures or moving images, so called multimedia information. Furthermore, the subjects to which the present invention is applicable are practically endless, of which only some have been mentioned. The given subjects and means for communication should therefore only be regarded as examples.

## Claims

1. System for interactive learning within a subject with measurable user progress, comprising:
- a training administration device (1), including a data set (8) of user training data items, each training data item including a representation of a training instruction and a target to be reached, control means for accessing said user training data items, and first communication means;
- a user device (3), including second communication means for transmitting user data to said first communication means,
wherein said control means is devised to select, from said data set, a subset of user training data items suitable for a user (A), dependent on said user data.

2. The system as recited in claim 1, wherein said control means is devised to transmit the selected subset to said user device, which user device comprises means (6) for presenting to said user the training instructions and targets of the received user training data items.

3. The system as recited in claim 2, wherein each of said user training data item of said subset is associated with a mutually unique difficulty degree parameter value, and where said control means is devised to transmit the user training data items of said subset one by one in the order of said difficulty degree parameters values.

4. The system as recited in claim 3, wherein said control means, after transmitting a first user training data item to said user device, is devised to require reception of a target fulfilment signal from the user device prior to transmitting a second user training data item to said user device.

5. The system as recited in claim 4, wherein said control means is devised to assign said mutually unique difficulty degree parameter values to the user training data items of said subset dependent on said user data.

6. The system as recited in claim 5, wherein said control means is devised to automatically change said user training data items dependent on user feedback data from one or more users.

7. The system as recited in claim 5, wherein said control means is devised to automatically change the order of the unique difficulty degree parameter values in the subset of said user training data items, dependent on user feedback data from one or more users.

8. The system as recited in claim 6 or 7, wherein said user feedback data comprises an indication from a user device of failure to reach a certain target.

9. The system as recited in claim 6 or 7, wherein said user feedback data comprises an indication from a user device of the time required for a user to reach a certain target.

10. The system as recited in claim 6 or 7, wherein said user feedback data comprises an indication from a user device of the effort required for a user to reach a certain target.

11. The system as recited in any of the previous claims, wherein said user data comprises starting skill data for the user, dependent on which starting skill data said control means is devised to select a first user training data item representing a first training instruction with which the interactive learning is suitable start.

12. The system as recited in any of the previous claims, wherein said user data comprises desired goal skill data for the user, dependent on which desired goal skill data said control means is devised to select a last user training data item representing a target corresponding to said desired goal skill data.

13. The system as recited in any of the previous claims, wherein said user data comprises information of the sex of the user.

14. The system as recited in any of the previous claims, wherein said user data comprises information of the age of the user.

15. The system as recited in any of the previous claims, wherein a user training data item comprises access data, by means of which auxiliary practice data is accessible for a user, which practice data is specifically adapted to aid the user to accomplish the target of that user training data item.
